Europäisches Patentamt

**European Patent Office**

Office européen des brevets

(19)

(11) Veröffentlichungsnummer : **0 050 190**
**B1**

(12)                    **EUROPÄISCHE PATENTSCHRIFT**

(45) Veröffentlichungstag der Patentschrift :
23.05.84

(51) Int. Cl.³ : **B 27 G 19/00**

(21) Anmeldenummer : **81105544.1**

(22) Anmeldetag : **15.07.81**

(54) **Sägetisch mit einer unter dessen Tischplatte angeordneten Stichsäge.**

(30) Priorität : **18.10.80 DE 3039459**

(43) Veröffentlichungstag der Anmeldung :
**28.04.82 Patentblatt 82/17**

(45) Bekanntmachung des Hinweises auf die Patenterteilung : **23.05.84 Patentblatt 84/21**

(84) Benannte Vertragsstaaten :
**DE FR GB IT**

(56) Entgegenhaltungen :
**FR-A- 1 579 627**
**US-A- 4 063 478**
**US-A- 4 204 446**

(73) Patentinhaber : **ROBERT BOSCH GMBH**
**Postfach 50**
**D-7000 Stuttgart 1 (DE)**

(72) Erfinder : **Kuhlmann, Gerhard**
**Hohewartstrasse 74**
**D-7000 Stuttgart 30 (DE)**
Erfinder : **Wolf, Erwin, Dipl.-Ing**
**Rosenhain 6**
**D-7153 Weissach i.T. (DE)**

Jouve, 18, rue St-Denis, 75001 Paris, France

## Beschreibung

### Stand der Technik

Die Erfindung geht aus von einem Sägetisch nach der Gattung des Hauptanspruchs. Ein aus der US-PS 4 204 446 bekannter Sägetisch dieser Art besitzt eine Schutzvorrichtung, die an einem den Sägeschlitz durchgreifenden Schwert befestigt ist. Eine solche in auch von Tischkreissägen her bekannter Wiese wie das Werkzeug durch die Tischplatte greifende Schutzvorrichtung ist hier nicht befriedigend. Sie erfordert eine komplizierte, bewegliche Lagerung dieser Schutzvorrichtung oder macht es unmöglich, mit der Stichsäge in gewohnter Weise Kurvenschnitte und Schrägschnitte auszuführen. Dennoch ist die erzielbare Schutzwirkung nicht optimal, weil die Schutzvorrichtung in einen der Werkstückdicke entsprechenden Abstand von der Tischplatte festgemacht werden muß. Demzufolge bleibt das Stichsägeblatt über diesen Bereich so lange zugänglich, bis das Werkstück an das Stichsägeblatt herangeführt ist. Zum Sauberhalten der Schnittstelle würde eine zusätzliche Absaug- oder Blasvorrichtung erforderlich, für deren Halterung ebenfalls das recht schwache Schwert verwendet werden müßte.

### Vorteile der Erfindung

Der erfindungsgemäße Sägetisch mit den kennzeichnenden Merkmalen des Hauptanspruchs hat demgegenüber den Vorteil, daß die angeführten Mängel auf einfache Weise vermieden werden. Mit der aus dem Raum oberhalb der Tischplatte das Stichsägeblatt übergreifenden, längs des Stichsägeblattes beweglich geführten und zugleich als Endstück eines Luftführungskanals ausgebildeten Schutzvorrichtung, ist mit einem Bauelement eine Mehrzahl von Aufgaben zugleich gelöst.

Durch die in den Unteransprüchen aufgeführten Maßnahmen sind vorteilhafte Weiterbildungen und Verbesserungen des angegebenen Sägetischs möglich. Besonders vorteilhaft für einen teilesparenden Aufbau ist es, wenn die Schutzvorrichtung zusätzlich einer Schaltvorrichtung zum Ein- und Ausschalten eines Staubsaugers angehört.

### Zeichnung

Zwei Ausführungsbeispiele des Erfindungsgegenstandes sind in der Zeichnung dargestellt und in der nachfolgenden Beschreibung näher erläutert. Es zeigen

Figur 1 eine Ansicht eines kompletten Sägetisch mit erfindungsgemäßer Ausstattung nach einem ersten Ausführungsbeispiel,

Figur 2 eine teilweise Draufsicht zu Fig. 1 mit einem Schnitt A-B,

Figur 3 eine Teilansicht einer erfindungsgemäßen Schutzvorrichtung mit einem von der Ausführung gemäß den Figuren 1 und 2 abweichenden Sichtfenster und

Figur 4 eine perspektivische Darstellung eines zweiten Ausführungsbeispiels der Erfindung, bei der die Tischbeine und die unterhalb der Tischplatte angeordneten Maschinenteile weggelassen sind.

### Beschreibung der Ausführungsbeispiele

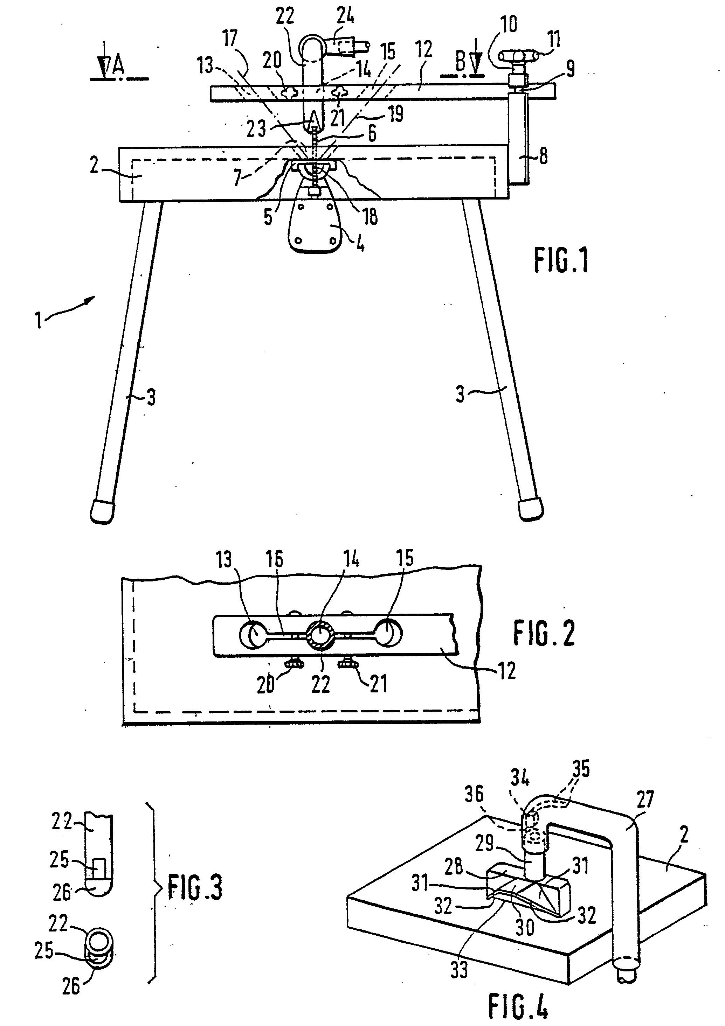

Im Ausführungsbeispiel nach den Figuren 1 und 2 ist ein Sägetisch 1 mit einer Tischplatte 2 und -beinen 3 zur Aufnahme einer als Handwerkzeugmaschine ausgebildeten Stichsäge 4 unterhalb der Tischplatte 2 ausgebildet. Hierfür ist die sonst als Auflage dienende Platte 5 der Stichsäge 4 an die Unterseite der Tischplatte 2 so angeschraubt, daß ein in die Stichsäge 4 eingespanntes Stichsägeblatt 6 durch einen Durchbruch 7 in der Tischplatte hindurch in dem Raum oberhalb der Tischplatte 2 greifen kann. An einem Rand der Tischplatte 2 ist ein Halter 8 befestigt, der eine Klemmführung 9 und eine dieser Klemmführung 9 zugeordnete Klemmschraube 10 mit einer Handhabe 11 besitzt. Die Klemmführung 9 dient zum Aufnehmen eines Rohrhalters 12 so, daß dieser Rohrhalter 12 in Richtung seiner Längsachse und parallel zur Tischplattenebene verschiebbar und festklemmbar ist. Der Rohrhalter 12 besitzt seinerseits drei Aufnahmebohrungen 13, 14 und 15. Diese drei Aufnahmebohrungen sind durch einen Schlitz 16 verbunden. Die mittlere der Aufnahmebohrungen 13 bis 15, die Aufnahmebohrung 14, ist senkrecht zur Tischplatte 2 hin ausgerichtet. Die Achse 17 der Aufnahmebohrung 13 ist gegenüber der Senkrechten zur Tischplatte 2 um − 45° geneigt und auf eine Schwenkachse 18 gerichtet, um die die Stichsäge 4 mit dem Stichsägeblatt 6 in bekannter Weise schwenkbar ist. Die Achse 19 der Aufnahmebohrung 15 ist gegenüber der Senkrechten zur Tischplatte 2 um + 45° geneigt und ebenfalls auf die Schwenkachse 18 gerichtet. Senkrecht zum Schlitz 16 sind eine Klemmschraube 20 zwischen den Aufnahmebohrungen 13 und 14 und eine Klemmschraube 21 zwischen den Aufnahmebohrungen 14 und 15 in den Rohrhalter 12 eingeschraubt. In der Darstellung nach den Figuren 1 und 2 ist ein Rohr 22 in die Aufnahmebohrung 14 eingesetzt und dort mittels der Klemmschrauben 20 und 21 festgeklemmt. Das Rohr 22 umschließt dabei das Stichsägeblatt 6 und gibt den Blick auf die mögliche Schnittstelle lediglich durch eine Sichtöffnung 23 frei. Das vom Stichsägeblatt 6 abgewendete Ende des Rohrs 22 ist in Vorschubrichtung eines zu schneidenden Werkstücks L-förmig abgewinkelt. Auf das abgewinkelte Ende des Rohrs 22 ist ein ebenfalls L-förmig abgewinkelter Staubsaugeranschlußstutzen 24 aufgeschoben. Der Durchmesser des Rohrs 22 ist so bemessen, daß seine lichte Weite ein Schwenken des Stichsägeblattes 6 von − 15° bis +15° zuläßt. Soll ein Schrägschnitt mit größerem Neigungswinkel des Stichsägeblatts 6 ausgeführt werden, so wird das Rohr 22 in eine der Aufnahmebohrungen 13 bzw. 15 umgesteckt, auf den richtigen Abstand zur Oberfläche der Tischplatte 2 eingestellt und dort festgeklemmt. Auf diese Weise sind Schrägschnitte mit dem Stichsägeblatt 6 mit einer Neigung von − 45° bis + 45° möglich. Um das Rohr 22 in allen Schwenklagen der Stichsäge möglichst dicht an das Werkstück heranführen zu können, ist das Vorderende dieses Rohrs 22 entsprechend abgerundet.

Mit dem Rohr 22 wird hier also sowohl der Bedienende geschützt als auch die Schnittsstelle sauber gehalten. Einen noch besseren Schutz des Bedienenden gewährleistet ein Rohrende gemäß Fig. 3. Dort ist das Ende der Rohrs 22 mit einem Sichtfenster 25 versehen, das nahe dem Werkstück durch einen Bügel 26 zusätzlich gesichert ist. Das Sichtfenster 25 wird durch den Bügel 26 gewissermaßen in Schnittrichtung erweitert. Diese besondere Ausbildung des Rohrendes wird in Fig. 3 durch dessen Ansicht und Draufsicht, teilweise geschnitten, verdeutlicht.

Im Ausführungsbeispiel gemäß Fig. 4 sind die Tischplatte 2 und die Beine 3 unverändert übernommen. Ebenso der Durchbruch 7 in der Tischplatte 2 und die unterhalb der Tischplatte angeschraubte Stichsäge 4 mit dem Stichsägeblatt 6. Anstelle des Halters 8 ist am Rand der Tischplatte 2 eine Traverse 27 befestigt, die über die Tischplatte 2 zur Schnittstelle hin ragt und hohl ausgebildet ist. Eine die Schnittstelle überdeckende Schutzhaube 28 besitzt einen Rohransatz 29, eine Handhabe 30, an die Handhabe 30 anschließende Stege 31 mit Gleitflächen 32 und eine Sichtöffnung 33. Der Rohransatz 29 greift in das Innere der Traverse 27 ein und ist dort verdrehungssicher aber senkrecht zur Tischplatte 2 verschiebbar gehalten. Die Schiebeführung ist dabei so leichtgängig, daß die Schutzhaube 28 durch ihr Eigengewicht aus der Traverse 27 herausgleitet, bis sie auf der Oberfläche der Tischplatte 2 oder auf einem Werkstück liegt. Im Innern der Traverse 27 befindet sich auch ein Schalter 34, der über Leitungen 35 mit einem Staubsauger verbunden ist. Ähnlich wie im ersten Ausführungsbeispiel ist der Anschlußstutzen des Staubsaugers an das freie Ende 36 der Traverse 27 angeschlossen. Der Schalter 34 dient dem Ein- und Ausschalten des Staubsaugers, abhängig von der Relativlage der Schutzhaube 28 zur Tischplatte 2. Hierfür sind bewegliche Schaltglieder 36 des Schalters 34 zum Ende des Rohransatzes 29 hin gerichtet. Liegt die Schutzhaube 28 direkt auf der Tischplatte 2 auf, ist der Schalter 34 geöffnet und damit der Staubsauger ausgeschaltet. Sobald die Schutzhaube 28 von der Tischplatte abgehoben wird, wird der Schalter 34 geschlossen und der Staubsauger eingeschaltet. Das Anheben der Schutzhaube 28 kann sowohl von Hand über die Handhabe 30 als auch dadurch erfolgen, daß ein Werkstück gegen die Gleitflächen 32 geführt und dessen Vorschubbewegung zum Abheben der Schutzhaube ausgenutzt wird. Die lichte Weite der Schutzhaube 28 gewährleistet volle Beweglichkeit des Stichsägeblatts 6 innerhalb der Schutzhaube. Mit dieser Schutzhaube 28 können also senkrechte und schräge Schnitte im gesamten, von der Stichsäge 4 erfaßbaren Winkelbereich ausgeführt werden, ohne daß es einer Umstellung bedarf. Auch hier sind die Schutzhauben und die Säuberungsfunktion mittels eines Bauelements erfüllt.

**Ansprüche**

1. Sägetisch mit einer unter dessen Tischplatte (2) angeordneten Stichsäge mit über die Tischplatte herausstehendem Stichsägeblatt (6) und einer dieses Stichsägeblatt umgreifenden, in Richtung des Stichsägeblattes (6) beweglich geführten Schutzvorrichtung, für als Handwerkzeugmaschinen ausgebildeten Stichsägen, dadurch gekennzeichnet, daß die Schutzvorrichtung für das Stichsägeblatt (6), von einem vom Rand der Tischplatte (2) her die Tischplatte übergreifenden Träger (12, 27) gehalten, aus dem Raum oberhalb der Tischplatte (2) her das Stichsägeblatt (6) übergreift, als Endstück (22, 28) eines Luftführungskanals ausgebildet.

2. Sägetisch nach Anspruch 1, dadurch gekennzeichnet, daß die Schutzvorrichtung ein das Stichsägeblatt (6) einschließendes Rohr (22) mit einer Sichtöffnung (23, 25) zur Schnittstelle ist.

3. Sägetisch nach einem der Ansprüche 1 und 2, dadurch gekennzeichnet, daß dem das Stichsägeblatt (6) einschließenden Rohr (22) ein Rohrhalter (12) zugeordnet ist, der ein Verstellen der Rohrneigung zur Tischplattenebene ermöglicht, um diese Rohrneigung allen möglichen Schnittwinkeln des Stichsägeblatts (6) anzupassen.

4. Sägetisch nach einem der Ansprüche 1 bis 3, dadurch gekennzeichnet, daß der Durchmesser des das Stichsägeblatt (6) einschließenden Rohrs (22) so bemessen ist, daß Schnittwinkeländerungen des Stichsägeblatts (6) über einen Bereich von etwa 39° ohne Änderung des Rohrneigungswinkels möglich sind.

5. Sägetisch nach einem der Ansprüche 1 bis 4, dadurch gekennzeichnet, daß der Rohrhalter (12) drei in verschiedenen Winkeln zueinander geneigte Aufnahmebohrungen (13, 14 und 15) für das das Stichsägeblatt (6) einschließende Rohr (22) aufweist.

6. Sägetisch nach einem der Ansprüche 1 bis 5, dadurch gekennzeichnet, daß der Rohrhalter (12) in einer Klemmführung (9) des Halters (8) in Richtung seiner Längsachse und parallel zur Tischplattenebene verschiebbar und festklemmbar ist.

7. Sägetisch nach einem der Ansprüche 1 bis 6, dadurch gekennzeichnet, daß das als Schutzvorrichtung dienende Rohr (22) L-förmig abgewinkelt und mit einem ebenfalls L-förmigen Staubsaugeranschlußstutzen (24) verbunden ist.

8. Sägetisch nach Anspruch 7, dadurch gekennzeichnet, daß der Staubsaugeranschlußstutzen (24) gegenüber dem Rohr (22) um 360° schwenkbar ist.

9. Sägetisch nach Anspruch 1, dadurch gekennzeichnet, daß die Schutzvorrichtung eine das Stichsägeblatt (6) einschließende Schutzhaube (28) mit rechteckigem Querschnitt ist, deren lichte Weite dem Stichsägeblatt (6) für alle einstellbaren Schnittwinkel und jede mögliche Eintauchtiefe genügend Spielraum läßt.

10. Sägetisch nach einem der Ansprüche 1 bis 9, dadurch gekennzeichnet, daß die Schutzhaube (28) über einen Rohransatz (29) verdrehungssicher und senkrecht zur Tischplatte (2) verschiebbar mit einer hohlen Traverse (27) verbunden ist, an deren anderem Ende ein Staubsauger angeschlossen ist.

11. Sägetisch nach einem der Ansprüche 1, 9 und 10, dadurch gekennzeichnet, daß die Schutzhaube (28) eine Sichtöffnung (33) zur Schnittstelle hin besitzt.

12. Sägetisch nach einem der Ansprüche 1, 9 bis 11, dadurch gekennzeichnet, daß die Führung der Schutzhaube (28) in der Traverse (27) so leichtgängig gehalten ist, daß die Schutzhaube (28) mit ihrem Eigengewicht auf der Tischplatte (2) bzw. dem Werkstück aufliegt.

13. Sägetisch nach einem der Ansprüche 1, 9 und 12, dadurch gekennzeichnet, daß die Schutzhaube (28) eine Handhabe (30) besitzt.

14. Sägetisch nach einem der Ansprüche 1 bis 13, dadurch gekennzeichnet, daß die Schutzvorrichtung eine schräge Gleitfläche (32) bildet, über die mittels des in Vorschubrichtung bewegten Werkstücks die Schutzvorrichtung des Stichsägeblatts (6) auf Werkstückdicke von der Tischplatte (2) abhebbar ist.

15. Sägetisch nach einem der Ansprüche 1, 9 bis 14, dadurch gekennzeichnet, daß die Handhabe (30) der Schutzhaube (28) über Stege (3) mit der Schutzhaube (28) verbunden ist, die schräge Gleitflächen (32) besitzen.

16. Sägetisch nach einem der Ansprüche 1 bis 15, dadurch gekennzeichnet, daß die Schutzvorrichtung mit einer Schaltvorrichtung (34, 35, 36) verbunden ist, deren bewegliche Schaltglieder (36) im Bewegungsbereich der Schutzvorrichtung in Richtung des Stichsägeblattes (6) angeordnet sind.

17. Sägetisch nach Anspruch 16, dadurch gekennzeichnet, daß die Schaltvorrichtung (34, 35, 36) mindestens teilweise innerhalb des Luftführungskanals (27) angeordnet ist.

**Claims**

1. Sawbench with a pad saw arranged beneath the table top (2) thereof and having a pad saw blade (6) protruding through the table top, and a guard arrangement surrounding this pad saw blade and disposed for movement in the direction of the pad saw blade (6), for pad saws designed as hand-held machine tools, characterised in that the guard arrangement for the pad saw blade (6), held by a carrier (12, 27) reaching over the table top (2) and from the edge thereof, reaches over the pad saw blade (6) from the space above the table top (2) and is designed as the end piece (22, 28) of an air duct.

2. Sawbench according to Claim 1, characterised in that the guard arrangement is a tube (22) which encloses the pad saw blade (6) and has an observation hole (23, 25) pointing towards the cutting position.

3. Sawbench according to one of Claims 1 and 2, characterised in that the tube (22) enclosing the pad saw blade (6) is associated with a tube holder (12) which enables the inclination of the tube relative to the plane of the table top to be adjusted, in order to adapt this inclination of the tube to all possible cutting angles of the pad saw blade (6).

4. Sawbench according to one of Claims 1 to 3, characterised in that the diameter of the tube (22) enclosing the pad saw blade (6) is such that changes in the cutting angle of the pad saw blade (6) are possible over a range of about 30° without altering the angle of inclination of the tube.

5. Sawbench according to one of Claims 1 to 4, characterised in that the tube holder (12) has three bores (13, 14 and 15), inclined relative to one another at different angles, for receiving the tube (22) enclosing the pad saw blade (6).

6. Sawbench according to one of Claims 1 to 5, characterised in that the tube holder (12) can be shifted and clamped down in a clamping guide (9) of the holder (8) in the direction of its longitudinal axis and parallel to the plane of the table top.

7. Sawbench according to one of Claims 1 to 6, characterised in that the tube (22) serving as the guard arrangement is angled in the shape of an L and is joined to a likewise L-shaped branch (24) for connection to a vacuum cleaner.

8. Sawbench according to Claim 7, characterised in that the branch (24) for connection to a vacuum cleaner can be swivelled by 360° relative to the tube (22).

9. Sawbench according to Claim 1, characterised in that the guard arrangement is a guard hood (28) which encloses the pad saw blade (6) and has a rectangular cross-section and the clear width of which leaves sufficient freedom to the pad saw blade (6) for all cutting angles which can be set and for any possible depth of penetration.

10. Sawbench according to one of Claims 1 and 9, characterised in that the guard hood (28) is joined, secure against rotation and displaceable perpendicular to the table top (2), via a pipe attachment (29) to a hollow tiebar (27), to the other end of which a vacuum cleaner is connected.

11. Sawbench according to one of Claims 1, 9 and 10, characterised in that the guard hood (28) has an observation hole (23) pointing towards the cutting position.

12. Sawbench according to one of Claims 1 and 9 to 11, characterised in that the guide of the guard hood (28) in the tiebar (27) is made to be running so easily that the guard hood (28) rests with its own weight on the table top (2) or on the workpiece.

13. Sawbench according to one of Claims 1, 9 and 12, characterised in that the guard hood (28) has a handle (30).

14. Sawbench according to one of Claims 1 to 13, characterised in that the guard arrangement forms an oblique sliding surface (32), along which the guard arrangement of the pad saw blade (6) can be lifted off the table top (2) up to the thickness of the workpiece by means of the workpiece being moved in the feed direction.

15. Sawbench according to one of Claims 1 and 9 to 14, characterised in that the handle (30) of the guard hood (28) is connected to the guard hood (28) via webs (31) which have oblique sliding surfaces (32).

16. Sawbench according to one of Claims 1 to 15, characterised in that the guard arrangement is connected to a switching device (34, 35, 36), the movable switching members (36) of which are located in the region of movement of the guard arrangement in the direction of the pad saw blade (6).

17. Sawbench according to Claim 16, characterised in that the switching device (34, 35, 36) is located at least partially within the air duct (27).

**Revendications**

1. Table de scie pourvue d'une scie à guichet montée sous le plateau (2) de cette table, avec lame de scie (6) faisant saillie au-dessus du plateau de table, et d'un dispositif de protection de la lame, mobile guidé en direction de celle-ci, pour scies à guichet constituées sous forme de machines-outils à main, table caractérisée en ce que le dispositif de protection pour la lame (6) de la scie à guichet, maintenu par un support (12, 27) placé par dessus le plateau de table (2) en partant du bord de celui-ci est engagé par dessus la lame (6) à partir de l'espace situé au-dessus du plateau de table (2), et est constitué sous la forme d'un tronçon d'extrémité (22, 28) d'un canal de guidage d'air.

2. Table de scie selon la revendication 1, caractérisée en ce que le dispositif de protection est un tube (22) entourant la lame (6) de la scie et comportant un regard (23, 25) vers l'endroit de coupe.

3. Table de scie selon l'une des revendications 1 et 2, caractérisée en ce que, au tube (22) entourant la lame (6) de la scie à guichet est affecté un support de tube (12) qui permet un réglage de l'inclinaison du tube par rapport au plan du plateau de table, afin d'adapter cette inclinaison du tube à tous les angles de coupe possibles de la lame (6) de la scie à guichet.

4. Table à scie selon l'une quelconque des revendications 1 à 3, caractérisée en ce que le diamètre du tube (22) entourant la lame (6) de la scie est prévu de telle manière que des variations de l'angle de coupe de la lame (6) de la scie soient possibles sur une zone d'environ 30° sans modification de l'angle d'inclinaison du tube.

5. Table de scie selon l'une quelconque des revendications 1 à 4, caractérisée en ce que le support de tube (12) comporte trois alésages de logement (13, 14 et 15) inclinés suivant des angles différents les uns par rapport aux autres pour le tube (22) entourant la lame (6) de la scie.

6. Table de scie selon l'une quelconque des revendications 1 à 5, caractérisée en ce que le support de tube (12) peut être déplacé et bloqué en position dans un guide de serrage (9) du support (8) dans la direction de son axe longitudinal et parallèlement au plan du plateau de la table.

7. Table de scie selon l'une quelconque des revendications 1 à 6, caractérisée en ce que le tube (22) servant de dispositif de protection est coudé en forme de L et relié à une tubulure (24) également en forme de L, de raccordement à un aspirateur de poussière.

8. Table de scie selon la revendication 7, caractérisée en ce que la tubulure (24) de raccordement à un aspirateur de poussière peut pivoter de 360° par rapport au tube (22).

9. Table de scie selon la revendication 1, caractérisée en ce que le dispositif de protection est un capot protecteur (28), à section transversale rectangulaire, entourant la lame (6) de la scie et dont la largeur intérieure laisse suffisamment de jeu à la lame (6) de la scie pour tous angles de coupe susceptibles d'être réglés et toutes profondeurs de pénétration possibles.

10. Table de scie selon l'une des revendications 1 à 9, caractérisée en ce que le capot de protection (28) est relié, par l'intermédiaire d'un ajutage (29), en étant empêché de tourner et déplaçable perpendiculairement au plateau de table (2), à une traverse creuse (27), à l'autre extrémité de laquelle est raccordé un aspirateur de poussière.

11. Table de scie selon l'une quelconque des revendications 1, 9 et 10, caractérisée en ce que le capot de protection (28) comporte un regard (33) vers l'endroit de coupe.

12. Table de scie selon l'une quelconque des revendications 1, 9 à 11, caractérisée en ce que le guide du capot de protection (28) dans la traverse (27) est maintenu à déplacement libre de telle manière que le capot de protection (28) s'applique par son propre poids sur le plateau de table (2) ou la pièce à usiner.

13. Table de scie selon l'une des revendications 1, 9 et 12, caractérisée en ce que le capot de protection (28) comporte une poignée (30).

14) Table de scie selon l'une quelconque des revendications 1 à 13, caractérisée en ce que le dispositif de protection forme une surface de glissement oblique (32) par l'intermédiaire de laquelle, au moyen de la pièce à usiner déplacée dans le sens de l'avance, le dispositif de protection de la lame (6) de la scie à guichet peut être détaché du plateau de table (2) sur une distance égale à l'épaisseur de la pièce à usiner.

15. Table de scie selon l'une quelconque des revendications 1, 9 à 14, caractérisée en ce que la poignée (30) du capot de protection (28) est reliée du capot de protection (28) par l'intermédiaire de traverses (31), qui présentent des surfaces de glissement obliques (32).

16. Table de scie selon l'une quelconque des revendications 1 à 15, caractérisée en ce que le dispositif de protection est relié à un dispositif de commutation (34, 35, 36) dont les éléments de commutation mobiles (36) sont disposés dans la zone de déplacement du dispositif de protection en direction de la lame (6) de la scie à guichet.

17. Table de scie selon la revendication 16, caractérisée en ce que le dispositif de commutation (34, 35, 36) est monté au moins en partie à l'intérieur du canal de guidage d'air (27).

FIG.1

FIG.2

FIG.3

FIG.4